# EUROPÄISCHE PATENTSCHRIFT

(11) **EP 4 347 277 B1**
(45) Veröffentlichungstag und Bekanntmachung des Hinweises auf die Patenterteilung: **17.09.2025**
(21) Anmeldenummer: 21824474.7
(22) Anmeldetag: 29.11.2021
(51) Int. Cl.: B60C 11/03, B60C 11/12

(54) **FAHRZEUGLUFTREIFEN**
PNEUMATIC TIRE FOR A VEHICLE
PNEU POUR VÉHICULE

(30) Priorität: 31.05.2021 DE 102021205490
(43) Veröffentlichungstag der Anmeldung: 10.04.2024
(73) Patentinhaber: Continental Reifen Deutschland GmbH, 30175 Hannover (DE)
(72) Erfinder: BAUER, Claudia, 30165 Hannover (DE); KAROW, Malte, 30165 Hannover (DE); WIESE, Klaus, 30165 Hannover (DE)
(74) Vertreter: Continental Corporation
(86) Internationale Anmeldenummer: PCT/DE2021/200218
(87) Internationale Veröffentlichungsnummer: WO 2022/253370

(56) Entgegenhaltungen:
- WO-A1-2020/129906
- CA-A1- 3 105 061
- US-B1- 6 386 253

## Beschreibung

Die Erfindung betrifft einen Fahrzeugluftreifen, insbesondere für den Einsatz unter winterlichen Fahrbedingungen, mit einem profilierten, eine Lauffläche aufweisenden Laufstreifen mit Profilblöcken, welche jeweils mittels mindestens zwei, parallel zueinander und unter einem Winkel ≤ 45° zur axialen Richtung des Laufstreifens verlaufenden Einschnitten, welche Austrittsöffnungen mit einer Breite von 0,40 mm bis 0,80 mm und Einschnittwände aufweisen, in Profilblocksegmente gegliedert sind,
wobei zumindest ein Profilblocksegment eine Rippen-Struktur aus zumindest einer entlang und seitlich der Austrittsöffnung eines Einschnittes und über die Erstreckung derselben verlaufenden Rippe aufweist, wobei die Rippe von einer in Fortsetzung der einen Einschnittwand in radialer Richtung verlaufenden Rippenflanke und einem an die Rippenflanke anschließenden Plateau mitgebildet ist.

Ein derartiger Fahrzeugluftreifen ist beispielsweise aus der WO 2020 129 906 A1 bekannt. Der Fahrzeugluftreifen weist einen Laufstreifen mit durch Querrillen voneinander getrennten Profilblöcken auf, die mit in Draufsicht in axialer Richtung verlaufenden Einschnitten in Profilblocksegmente gegliedert sind. An den an den Querrillen liegenden Randbereichen sind die Profilblocksegmente mit seichten Einschnitten versehen. Auf den Profilblocksegmenten sind angrenzend an die seichten Einschnitte im jeweiligen Blockrandbereich in Draufsicht parallel zu den Querrillen verlaufende Rippen-Strukturen aus jeweils einer einzigen Rippe ausgebildet, wobei die Rippe eine in radialer Richtung gegenüber dem Niveau der Blockaußenfläche ermittelte Höhe von bis 40% ihrer in Draufsicht vorliegenden Länge aufweist. Die Rippe ist im Querschnitt im Wesentlichen rechteckig, wobei die zur nächstliegenden Blockkante liegende Rippenkante durch eine Fase ersetzt ist, an welcher ein Plateau und eine in Fortsetzung der einen Einschnittwand in radialer Richtung verlaufende Rippenflanke anschließen.

Aus der US 6 386 253 B1 ist ein Fahrzeugluftreifen mit einem Laufstreifen mit Profilblöcken bekannt, auf deren Außenflächen je eine Rippenstruktur aus vier an den Blockrandbereichen verlaufenden, an den Blockecken aneinander anschließenden Rippen ausgebildet ist. Ferner sind die Profilblöcke jeweils mit zumindest einem seichten Einschnitt mit einer Breite und einer Tiefe von jeweils 0,3 mm bis 1,5 mm versehen, welcher den Profilblock bis zu den jeweiligen Rippen durchquert. Bei der Vulkanisation eines solchen Fahrzeugluftreifens sollen Lufteinschlüsse in der Vulkanisationsform vermieden werden, sodass diese mit wenig Entlüftungsventilen auskommt.

Die CA 3 105 061 A1 offenbart einen Fahrzeugluftreifen mit einem Laufstreifen mit Profilblöcken, welche druch in Draufischt in axialer Richtung verlaufende Querrillen begrenzt und mit in Draufsicht parallel zu den Querrillen verlaufenden Einschnitten in Profilblocksegmente strukturiert sind. An den Randbereichen der Profilblocksegmente sind in Draufsicht parallel zu den Querrillen verlaufende Rippen-Strukturen aus je einer einzigen Rippe ausgebildet, wobei die zur nächstliegenden Querrille verlaufende Rippenkante durch eine Fase ersetzt ist.

Aus der JP 2006 131 021 A ist ein Fahrzeugluftreifen bekannt, dessen Laufstreifen durch in Umfangsrichtung umlaufende Umfangsrillen und durch in axialer Richtung verlaufende Querrillen in rechteckige Profilblöcke gegliedert ist, welche jeweils mit einer Anzahl von parallel zu den Querrillen verlaufenden Einschnitten versehen sind. Sämtliche Profilblocksegmente sind mit muldenförmig vertieften Außenflächen versehen, sodass sich die Austrittsöffnungen der Einschnitte und die beiden in axialer Richtung verlaufenden Randkanten der Profilblöcke auf spitzen, die Profilblöcke entlang der Einschnitte durchquerenden Blockbereichen befinden. Die tiefsten Stellen der Vertiefungen weisen zu den spitzen Blockbereichen eine Höhendifferenz von 0,20 mm auf. Ein Fahrzeugluftreifen mit einem derartigen Laufstreifen soll vor allem auf eisigen Fahrbahnen einen verbesserten Kanteneffekt bewirken.

Aus der EP 0 393 873 B1 ist ein weiterer Fahrzeugluftreifen mit Profilblöcken mit Einschnitten bekannt, welche im Wesentlichen in axialer Richtung und parallel zueinander verlaufen. Die Profilblockoberflächen zwischen zwei in Umfangsrichtung aufeinanderfolgenden Einschnitten sind jeweils abgeschrägt. Die durch die Abschrägungen entstehenden Kantenbereiche bei den Austrittsöffnungen der Einschnitte sollen eine besonders gute Wirkung als Griffkanten besitzen.

Darüber hinaus sind, beispielsweise aus der DE 699 17 139 T2 und der JP 2011 140 254 A, Reifen mit Laufstreifen mit Profilblöcken bekannt, deren in axialer Richtung oder im Wesentlichen in axialer Richtung verlaufende randseitige Blockkanten erhöht ausgebildet sind.

Der Erfindung liegt die Aufgabe zugrunde, bei einem Fahrzeugluftreifen der eingangs genannten Art eine Struktur an der Blockoberfläche zur Verfügung zu stellen, welche auf besondere effektive Weise zu einer weiteren Verbesserung des Fahrverhaltens unter winterlichen Fahrbedingungen beiträgt, insbesondere die Griff- und Traktionseigenschaften auf eisigen und/oder schneebedeckten Fahrbahnen verbessert und durch eine Erhöhung des Kantendrucks einen Verzahnungs- und Wischeffekt erzielt, sodass insbesondere der sich beim Abrollen des Reifens auf einer eisigen Oberfläche bildende dünne Wasserfilm besonders gut in die die Profilblöcke umgebenden Rillen abgeleitet werden kann.

Gelöst wird die gestellte Aufgabe erfindungsgemäß dadurch,
dass die Rippe von der in Fortsetzung der einen Einschnittwand in radialer Richtung verlaufenden Rippenflanke, dem Plateau und einer an das Plateau anschließenden durchgehend konkav gerundeten, daher nach innen gewölbten, Rippenflanke gebildet ist,
wobei das Plateau eine Breite von 0,10 mm bis 0,40 mm aufweist,
wobei die durchgehend konkav gerundete Rippenflanke am Profilblocksegment bis auf ein Basisniveau abfällt, welches jenes Niveau wiedergibt, auf dem sich eine durch die radial innersten Stellen der durchgehend konkav gerundeten Rippenflanken verlaufende Einhüllende des Laufstreifens befindet und wobei die Rippe gegenüber dem Basisniveau eine Höhe von 0,20 mm bis 0,70 mm aufweist.

Erfindungsgemäß ausgeführte Reifen weisen daher im Laufstreifen Profilblöcke mit einer speziellen "Sägezahnstruktur" auf, welche auf schnee- und eisbedeckten Fahrbahnen für besonders effektive und ausgeprägte Kanten- und Wischeffekte sorgt. Der erzielbare Verzahnungseffekt ist vor allem auf rauen und eisigen Oberflächen besonders vorteilhaft.

Bei einer bevorzugten Ausführungsform weist zumindest ein Profilblocksegment eine Rippen-Struktur mit zwei Rippen auf, welche entlang der Austrittsöffnungen der beiden das Profilblocksegment begrenzenden Einschnitte verlaufen. Rippen-Strukturen mit zwei Rippen sorgen auf schnee- und eisbedecktem Untergrund für einen besonders effektiven Kanteneffekt.

Bei dieser Ausführung ist es für eine gleichmäßige Blocksteifigkeit vorteilhaft, wenn die konkav gerundeten Rippenflanken zwischen den beiden Rippen eine gleichmäßig konkav gerundete Mulde bilden, wobei die Rundung der Mulde insbesondere entlang eines Kreisbogens erfolgt.

Bei einer weiteren vorteilhaften Ausgestaltung, bei welchem der Laufstreifen Profilblöcken mit parallel zu den Einschnitten verlaufenden randseitigen Blockkanten, an welche Blockflanken anschließen, und blockrandseitige Profilblocksegmenten aufweist, ist zumindest eines der beiden blockrandseitigen Profilblocksegmente mit einer Rippen-Struktur mit einer Rippe versehen, deren Plateau von der randseitigen Blockkante begrenzt ist, wobei die in radialer Richtung verlaufende Rippenflanke an die Blockflanke anschließt. Eine derartige Ausgestaltung ist vor allem im mittleren Bereich des Laufstreifens vorteilhaft und sorgt hier für eine besonders wirksame Übertragung von Traktions- und Bremskräften.

Bei einer weiteren Ausführung weist zumindest ein Profilblocksegment eine Rippen-Struktur mit einer einzigen Rippe auf, wobei vom Plateau der Rippe die konkav gerundete Rippenflanke bis auf das Basisniveau im mittleren Bereich des Profilblocksegmentes verläuft, und wobei sich die verbleibende Außenfläche des Profilblocksegmentes auf dem Basisniveau befindet. Eine derartige Ausgestaltung von Profilblöcken ist beispielweise in den Schulterbereichen des Laufstreifens von Vorteil.

Bei einer weiteren bevorzugten Ausgestaltung weist zumindest eines, insbesondere eines der blockrandseitigen Profilblocksegmente eine Außenfläche auf, die sich komplett auf dem Basisniveau der Lauffläche befindet. Eine derartige Ausgestaltung von Profilblöcken ist beispielsweise in schulterseitigen Laufstreifenbereichen vorteilhaft.

Weitere besonders bevorzugte Ausgestaltungen gestatten vorteilhafte Kanten- und Wischeffekte, abgestimmt auf die sonstige Ausgestaltung des Laufstreifens und auf die Position der Profilblöcke am Laufstreifen.

Bei einer dieser Ausführungen weist der Laufstreifen Profilblöcke auf, die in sämtlichen Profilblocksegmenten Rippen-Strukturen mit zwei Rippen besitzen.

Bei einer weiteren derartigen Ausführung weist der Laufstreifen Profilblöcke auf, bei welchen einige oder sämtliche Profilblocksegmente eine Rippen-Struktur mit jeweils einer einzigen Rippe aufweisen, wobei die Rippen entweder entlang eines randseitigen Blockkantenbereiches oder entlang einer Austrittsöffnung eines Einschnittes verlaufen.

Darüber hinaus ist eine Ausführung möglich, bei welcher der Laufstreifen Profilblöcke aufweist, bei welchen zumindest zwei einander benachbarte Profilblocksegmente eine Rippen-Struktur mit jeweils einer Rippe aufweisen, welche entlang der Austrittsöffnung des jeweils äußeren Einschnittes verläuft.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Draufsicht auf einen Umfangsabschnitt eines Laufstreifens eines Fahrzeugluftreifens,
Fig. 2 eine Schnittdarstellung entlang der Linie II-II der Fig. 1,
Fig. 3 eine Schnittdarstellung entlang der Linie III-III der Fig. 1 und
Fig. 4 bis Fig. 9 anhand von zu Fig. 2 analogen Schnittdarstellungen weitere Ausführungsvarianten der Erfindung.

Gemäß der Erfindung ausgeführte Fahrzeugluftreifen sind Reifen für Kraftfahrzeuge, insbesondere für mehrspurige Kraftfahrzeuge, vorzugsweise Reifen in Radialbauart für Personenkraftwagen, Vans oder Light-Trucks. Darüber hinaus sind gemäß der Erfindung ausgeführte Fahrzeugluftreifen Winterreifen oder Ganzjahresreifen, also Reifen, die insbesondere für den Einsatz unter winterlichen Fahrbedingungen, demnach auf eisigen oder schneebedeckten Fahrbahnen, vorgesehen und besonders gut geeignet sind.

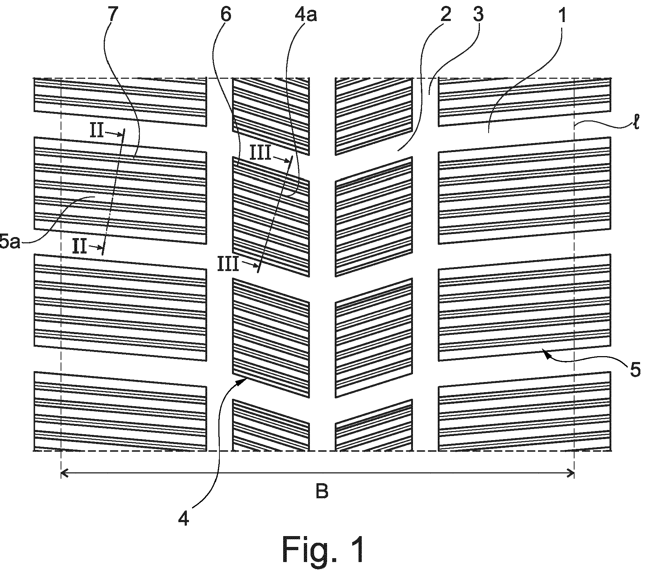

Fig. 1 zeigt eine Draufsicht (Abwicklung in die Ebene) eines Umfangsabschnittes eines Laufstreifens eines Fahrzeugluftreifens. Die seitlichen Ränder der Bodenaufstandsfläche sind durch gestrichelte Linien I gekennzeichnet, wobei die Breite B der Bodenaufstandsfläche insbesondere mit einem auf einer Normfelge montierten Reifen (Last bei 70 % der maximalen Tragfähigkeit, Innendruck 85 % des Normdruckes, gemäß ETRTO-Standards) ermittelt wird.

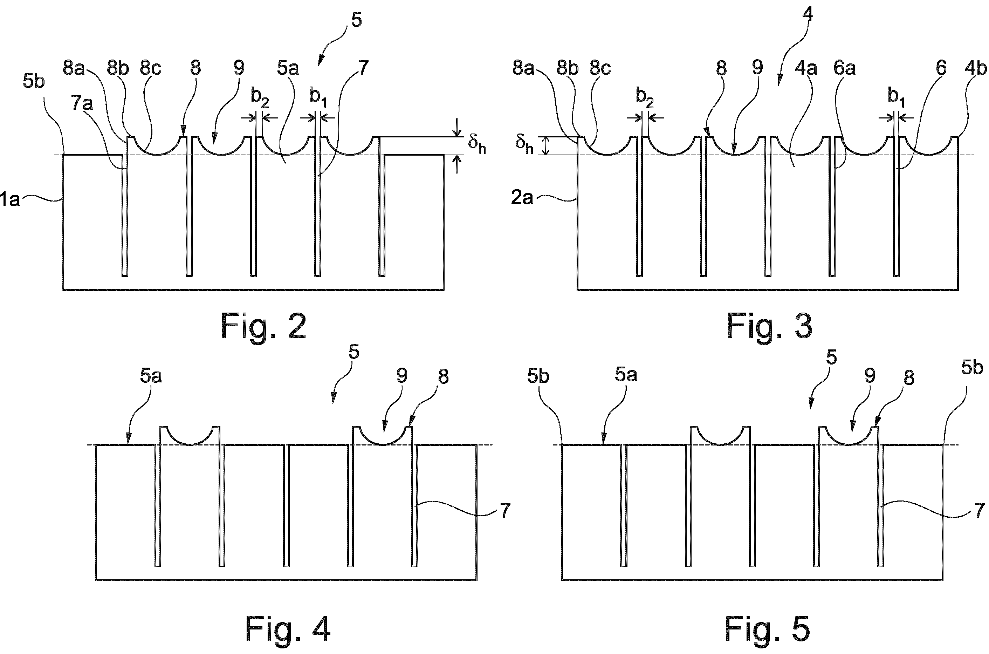

Beim gezeigten schematischen Ausführungsbeispiel weist der Laufstreifen über seine Breite B insgesamt V-förmig verlaufende Querrillen 1, 2 auf, die unter Winkeln ≤ 45° zur axialen Richtung verlaufen und die gemeinsam mit drei in Umfangsrichtung umlaufenden Umfangsrillen 3 den Laufstreifen in zwei im mittleren Laufstreifenbereich befindliche Blockreihen mit Profilblöcken 4 und zwei schulterseitige Blockreihen mit Profilblöcken 5 gliedern. Beim gezeigten Ausführungsbeispiel verlaufen die zwischen den mittleren Profilblöcken 4 befindlichen Querrillen 2 unter einem Winkel von vorzugsweise 30° bis 40° zur axialen Richtung, die zwischen den schulterseitigen Profilblöcken 5 befindlichen Querrillen 1 verlaufen unter einem Winkel ≤ 30°, vorzugsweise ≤ 20°, zur axialen Richtung. Die Querrillen 1, 2 sind von Blockflanken 1a, 2a der Profilblöcke 4, 5 begrenzt (Fig. 2, Fig. 3). Die Umfangsrillen 3 weisen eine der vorgesehenen Profiltiefe entsprechende Tiefe auf, die Querrillen 1, 2 können eine geringere Tiefe aufweisen oder zumindest abschnittsweise diese Tiefe besitzen.

Es wird darauf verwiesen, dass ein gemäß der Erfindung ausgeführter Laufstreifen eine beliebige Gliederung oder Strukturierung in Profilblöcke aufweisen kann. Es ist daher nicht von Belang, ob der Laufstreifen, wie beim dargestellten Ausführungsbeispiel, laufrichtungsgebunden ausgeführt ist oder bei anderen möglichen Ausführungen mit Profilblockreihen und/oder Profilrippen nicht laufrichtungsgebunden gestaltet ist. Dabei sind beispielsweise auch Ausgestaltungen möglich, bei welchen der Laufstreifen durch Schräg- und/oder Diagonalrillen, die unter einem größeren Winkel als 45° zur axialen Richtung verlaufen, in Profilblöcke gegliedert ist.

Bei dem in Fig. 1 gezeigten Ausführungsbeispiel ist sowohl in den mittleren Profilblöcken 4 als auch in den schulterseitigen Profilblöcken 5 jeweils eine Anzahl von die Profilblöcke 4, 5 durchquerenden Einschnitten 6, 7 ausgebildet. In jedem Profilblock 4, 5 verlaufen die Einschnitte 6, 7 parallel zu den Querrillen 1, 2, ferner parallel zueinander, gerade und unter zumindest im Wesentlichen gleich großen Abständen zueinander sowie zu den Blockkanten 4b, 5b (Fig. 2, Fig. 3) bei den Querrillen 1, 2. Die Einschnitte 6, 7 erstrecken sich daher zur axialen Richtung wie die Querrillen 1, 2 und unter einem Winkel ≤ 45°. Die Einschnitte 6, 7 weisen Einschnittwände 6a, 7a (Fig. 2, Fig. 3) und eine Tiefe auf, die abschnittsweise der Profiltiefe entsprechen kann, üblicherweise beträgt die Tiefe der Einschnitte 6, 7 insbesondere abschnittsweise zumindest 90% der Profiltiefe. An ihren Austrittsöffnungen weisen die Einschnitte 6, 7 eine insbesondere konstante Breite b₁ von 0,4 mm bis 0,8 mm auf.

Fig. 1 zeigt ferner eine Ausführung, bei welcher in jedem Profilblock 4, 5 jeweils fünf Einschnitte 6, 7 ausgebildet sind. Die Anzahl der Einschnitte 6, 7 pro Profilblock 4, 5 beträgt zumindest zwei, vorzugsweise zumindest drei, und kann auch mehr als fünf betragen. Je nach der Ausgestaltung der Profilblöcke des Laufstreifens können die Einschnitte 6, 7 zu Querrillen, Schräg- oder Diagonalrillen auch gewinkelt verlaufen.

Fig. 2 zeigt einen Schnitt durch einen schulterseitigen Profilblock 5 senkrecht zum Verlauf der Einschnitte 7, welche den Profilblock 5, in Draufsicht betrachtet, in Profilblocksegmente 5a gliedern. Die beiden in Umfangsrichtung des Laufstreifens blockrandseitig befindlichen Profilblocksegmente 5a weisen Außenflächen auf, die sich komplett auf dem Basisniveau (gestrichelte Linie in Fig. 2) der Lauffläche befinden und, wenn die insgesamt vorhandene Krümmung des Laufstreifens als vernachlässigbar angesehen wird, als ebene Flächen angesehen werden können und die bis zu den beiden "ersten" Einschnitten 7 reichen. Das Basisniveau gibt daher jenes Niveau wieder, auf dem sich eine Einhüllende des Laufstreifens befindet und welche die nahezu "ebenen" Außenflächen auf Profilblöcken 4, 5 enthält. Die weiteren Profilblocksegmente 5a weisen jeweils eine Rippen-Struktur mit einem bei jedem Einschnitt 7 entlang und seitlich seiner Austrittsöffnung verlaufenden Rippe 8 auf. Jede Rippe 8 weist eine in Fortsetzung der einen Einschnittwand 7a in radialer Richtung verlaufende Rippenflanke 8a, ein Plateau 8b und eine konkav gerundete Rippenflanke 8c auf. Der Verlauf der Rippenflanken 8c ist derart, dass zwischen den beiden Rippen 8 eines Profilblocksegmentes 5a eine einheitlich konkav gerundete Mulde 9 vorliegt, die Rundung erfolgt insbesondere entlang eines Kreisbogens. Die tiefste Stelle der Mulde 9 befindet sich auf dem Basisniveau (gestrichelte Linie in Fig. 2) der Lauffläche. Bei Einschnitten 7, welche sich innerhalb der blockrandseitig verlaufenden Einschnitte 7 befinden, ist die Austrittsöffnung jeweils zwischen den Plateaus 8b zweier Rippen 8.

Jedes Plateau 8b weist eine Breite b₂ von 0,10 mm, vorzugsweise 0,20 mm, bis 0,40 mm auf, verläuft parallel zum Basisniveau und überragt dieses um eine Höhe δₕ von 0,20 mm, vorzugsweise 0,30 mm, bis 0,70 mm. Innerhalb eines bestimmten Laufstreifens sind die vorgesehenen Rippen-Strukturen bezüglich ihrer Dimensionierung (Breite b₂ und Höhe δₕ) bevorzugt übereinstimmend gestaltet.

Fig. 3 zeigt einen Schnitt durch einen mittleren Profilblock 4 senkrecht zum Verlauf der Einschnitte 6, welche den Profilblock 4, in Draufsicht betrachtet, in Profilblocksegmente 4a gliedern, wobei sämtliche Profilblocksegmente 4a eine Rippen-Struktur mit zwei Rippen 8 - mit einer Höhe δₙ und einer Breite b₂ - und mit einer Mulde 9 zwischen den Rippen 8, wie beschrieben, aufweisen. Die beiden blockrandseitigen Profilblocksegmente 4a weisen jeweils randseitig eine Rippe 8 auf, deren Rippenflanke 8a in Fortsetzung der die Querrille 2 begrenzenden Blockflanke 2a verläuft. Das Plateau 8b der beiden randseitigen Profilblocksegmente 4a ist somit außenseitig jeweils von der hier befindlichen Blockkante 4b begrenzt.

In der nachfolgenden Beschreibung der in Fig. 4 bis 9 in zu Fig. 2 analogen Schnittdarstellungen gezeigten Ausführungsvarianten entsprechen die verwendeten Bezugsziffern jenen den in Fig. 2 verwendeten Bezugsziffern. Die dargestellten Profilblöcke 5 weisen daher auch jeweils fünf Einschnitte 7 auf.

Die in Fig. 4 und Fig. 5 gezeigten Beispiele sind Varianten der in Fig. 2 gezeigten Ausführung. Jeweils zwei der Profilblocksegmente 5a sind mit einer Rippen-Struktur mit zwei Rippen 8 versehen. In Fig. 4 sind die beiden blockrandseitigen Profilblocksegmente 5a und die beiden blockmittigen Profilblocksegmente 5a ohne Rippen-Struktur. In Fig. 5 schließen an die eine Blockkante 5b zwei Profilblocksegmente 5a mit Außenflächen auf Basisniveau an, bei der zweiten Blockkante 5b befindet sich ein einziges derartiges Profilblocksegment 5a. Es befindet sich bei dieser Ausführung ein weiteres Profilblocksegment 5a mit einer Außenfläche auf Basisniveau zwischen zwei Profilblocksegmenten 5a mit einer Rippen-Struktur mit jeweils zwei Rippen 8.

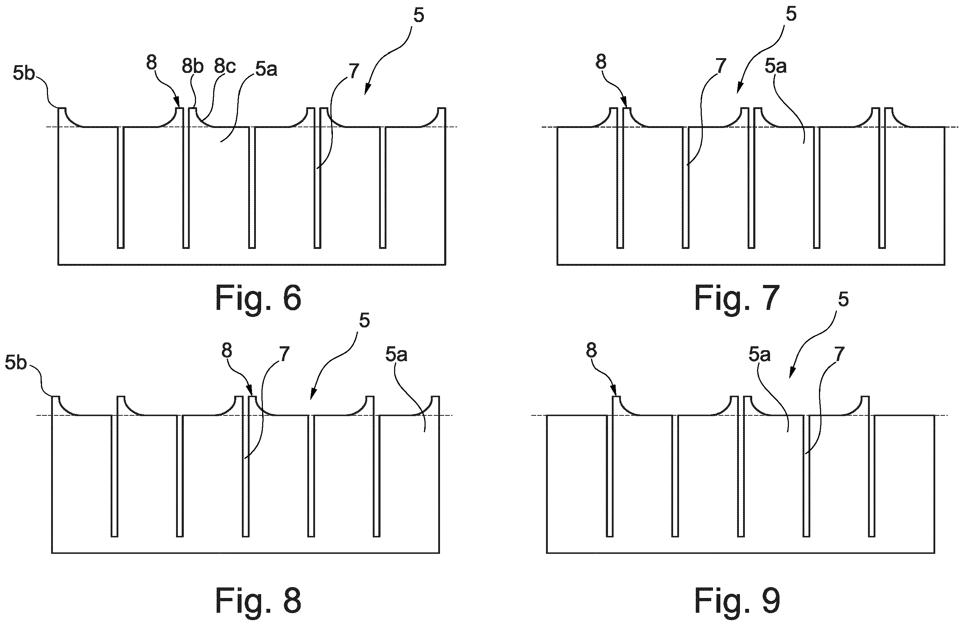

Bei den in den Figuren 6 bis 9 gezeigten Ausführungsbeispielen weisen einige (Fig. 9) oder sämtliche (Fig. 6 bis 8) Profilblocksegmente 5a eine Rippen-Struktur mit jeweils einer einzigen Rippe 8 auf. Die Ausgestaltung und Dimensionierung der Rippen 8 entspricht der Ausgestaltung und Dimensionierung der anhand von Fig. 2 beschriebenen Rippe 8. Vom Plateau 8b verläuft die konkav gerundete Rippenflanke 8c bis zum Basisniveau in der Mitte des jeweiligen Profilblocksegmentes 5a, wobei sich die verbleibende Außenfläche des Profilblocksegmentes 5a auf dem Basisniveau befindet. Die Anordnung der Rippen 8 in den oder in einigen der Profilblocksegmente(n) 5a ist beispielsweise derart, dass, wie es Fig. 6 bis 9 in unterschiedlichen Ausführungen zeigen, bei zwei oder drei Paaren von einander benachbarten Profilblocksegmenten 5a jeweils zwei Rippen 8 durch eine Austrittsöffnung eines Einschnittes 7 voneinander getrennt sind. In Fig. 9 sind ferner die beiden blockrandseitigen Profilblocksegmente 5a ohne Rippen ausgeführt, ihre Außenflächen befinden sich auf dem Basisniveau.

### Bezugsziffernliste

- 1, 2: Querrille
- 1a, 2a: Blockflanke
- 3: Umfangsrille
- 4: Profilblock, Mitte
- 4a, 5a: Profilblocksegment
- 4b, 5b: Blockkante
- 5: Profilblock, Schulter
- 6, 7: Einschnitt
- 6a, 7a: Einschnittwand
- 8: Rippe
- 8a, 8c: Rippenflanke
- 8b: Plateau
- 9: Mulde
- B: Breite Bodenaufstandsfläche
- b₁: Breite Einschnitt
- b₂: Breite Plateau
- l: Linie
- δₕ: Höhe

## Patentansprüche

1. Fahrzeugluftreifen, insbesondere für den Einsatz unter winterlichen Fahrbedingungen, mit einem profilierten, eine Lauffläche aufweisenden Laufstreifen mit Profilblöcken (4, 5), welche jeweils mittels mindestens zwei, parallel zueinander und unter einem Winkel ≤ 45° zur axialen Richtung des Laufstreifens verlaufenden Einschnitten (6, 7), welche Austrittsöffnungen mit einer Breite (b₁) von 0,40 mm bis 0,80 mm und Einschnittwände (6a, 7a) aufweisen, in Profilblocksegmente (4a, 5a) gegliedert sind,
wobei zumindest ein Profilblocksegment (4a, 5a) eine Rippen-Struktur aus zumindest einer entlang und seitlich der Austrittsöffnung eines Einschnittes (6, 7) und über die Erstreckung derselben verlaufenden Rippe (8) aufweist, wobei die Rippe (8) von einer in Fortsetzung der einen Einschnittwand (6a, 7a) in radialer Richtung verlaufenden Rippenflanke (8a) und einem an die Rippenflanke (8a) anschließenden Plateau (8b) mitgebildet ist,
**dadurch gekennzeichnet,**
**dass** die Rippe (8) von der in Fortsetzung der einen Einschnittwand (6a, 7a) in radialer Richtung verlaufenden Rippenflanke (8a), dem Plateau (8b) und einer an das Plateau (8b) anschließenden durchgehend konkav gerundeten, daher nach innen gewölbten, Rippenflanke (8c) gebildet ist, wobei das Plateau (8b) eine Breite (b₂) von 0,10 mm bis 0,40 mm aufweist, wobei die durchgehend konkav gerundete Rippenflanke (8b) am Profilblocksegment (4a, 5a) bis auf ein Basisniveau abfällt, welches jenes Niveau wiedergibt, auf dem sich eine durch die radial innersten Stellen der durchgehend konkav gerundeten Rippenflanken (8c) verlaufende Einhüllende des Laufstreifens befindet und
wobei die Rippe (8) gegenüber dem Basisniveau eine Höhe (δₕ) von 0,20 mm bis 0,70 mm aufweist.

2. Fahrzeugluftreifen nach Anspruch 1, **dadurch gekennzeichnet, dass** zumindest ein Profilblocksegment (4a, 5a) eine Rippen-Struktur mit zwei Rippen (8) aufweist, welche entlang der Austrittsöffnungen der beiden das Profilblocksegment (4a, 5a) begrenzenden Einschnitte (6, 7) verlaufen.

3. Fahrzeugluftreifen nach Anspruch 2, **dadurch gekennzeichnet, dass** die konkav gerundeten Rippenflanken (8c) der beiden Rippen (8) zwischen den beiden Rippen (8) eine gleichmäßig konkav gerundete Mulde (9) bilden, wobei die Rundung der Mulde (9) insbesondere entlang eines Kreisbogens erfolgt.

4. Fahrzeugluftreifen nach Anspruch 1 oder 2, mit einem Laufstreifen mit Profilblöcken (4, 5) mit parallel zu den Einschnitten (6, 7) verlaufenden randseitigen Blockkanten (4b, 5b), an welche Blockflanken (1a, 2a) anschließen, und mit blockrandseitigen Profilblocksegmenten (4a, 5a), **dadurch gekennzeichnet, dass** zumindest eines der beiden blockrandseitigen Profilblocksegmente (4a, 5a) eine Rippen-Struktur mit einer Rippe (8) aufweist, deren Plateau (8b) von der randseitigen Blockkante (4b, 5b) begrenzt ist, wobei die in radialer Richtung verlaufende Rippenflanke (8a) an die Blockflanke (1a, 2a) anschließt.

5. Fahrzeugluftreifen nach einem der Ansprüche 1 bis 4, **dadurch gekennzeichnet, dass** zumindest ein Profilblocksegment (5a) eine Rippen-Struktur mit einer einzigen Rippe (8) aufweist, wobei vom Plateau (8b) der Rippe (8) die konkav gerundete Rippenflanke (8c) bis auf das Basisniveau im mittleren Bereich des Profilblocksegmentes (5a) verläuft, wobei sich die verbleibende Außenfläche des Profilblocksegmentes (5a) auf dem Basisniveau befindet.

6. Fahrzeugluftreifen nach einem der Ansprüche 1 bis 5, **dadurch gekennzeichnet, dass** zumindest eines der Profilblocksegmente (5a) eine Außenfläche aufweist, die sich komplett auf dem Basisniveau der Lauffläche befindet.

7. Fahrzeugluftreifen nach einem der Ansprüche 1 bis 6, **dadurch gekennzeichnet, dass** zumindest eines der blockrandseitigen Profilblocksegmente (5a) eine Außenfläche aufweist, die sich komplett auf dem Basisniveau der Lauffläche befindet.

8. Fahrzeugluftreifen nach einem der Ansprüche 1 bis 7, **dadurch gekennzeichnet, dass** zumindest ein von zwischen zwei einander benachbarten Einschnitten (7) befindliches Profilblocksegment (5a) eine Außenfläche aufweist, die sich komplett auf dem Basisniveau der Lauffläche befindet.

9. Fahrzeugluftreifen nach einem der Ansprüche 1 bis 4, **dadurch gekennzeichnet, dass** der Laufstreifen Profilblöcke (4) aufweist, deren sämtliche Profilblocksegmente (4a) Rippen-Strukturen mit zwei Rippen (8) aufweisen.

10. Fahrzeugluftreifen nach einem der Ansprüche 1 bis 4, **dadurch gekennzeichnet, dass** der Laufstreifen Profilblöcke (5) aufweist, bei welchen einige oder sämtliche Profilblocksegmente (5a) eine Rippen-Struktur mit jeweils einer einzigen Rippe (8) aufweisen, wobei die Rippen (8) entweder entlang einer randseitigen Blockkante (5b) oder entlang einer Austrittsöffnung eines Einschnittes (7) verlaufen.

11. Fahrzeugluftreifen nach einem der Ansprüche 1 bis 4, **dadurch gekennzeichnet, dass** der Laufstreifen Profilblöcke (5) aufweist, bei welchen zumindest zwei einander benachbarte Profilblocksegmente (5a) eine Rippen-Struktur mit jeweils einer Rippe (8) aufweisen, welche entlang der Austrittsöffnung des jeweils äußeren Einschnittes (7) verläuft.

## Claims

1. Pneumatic vehicle tyre, in particular for use under winter driving conditions, with a profiled tread which has a running surface and comprises profile blocks (4, 5), which are in each case divided into profiled block segments (4a, 5a) by means of at least two sipes (6, 7) which extend parallel to one another and at an angle of ≤ 45° in relation to the axial direction of the tread and which have outlet openings with a width (b₁) of 0.40 mm to 0.80 mm and sipe walls (6a, 7a), wherein at least one profile block segment (4a, 5a) has a rib structure consisting of at least one rib (8) which extends along and to the side of the outlet opening of a sipe (6, 7) and over the extent thereof, wherein the rib (8) is formed partly by a rib flank (8a) which extends as a continuation of the one sipe wall (6a, 7a) in the radial direction and by a plateau (8b) which adjoins the rib flank (8a),
**characterized**
**in that** the rib (8) is formed by a rib flank (8a) which extends as a continuation of the one sipe wall (6a, 7a) in the radial direction, the plateau (8b) and a continuously concavely rounded, therefore inwardly curved, rib flank (8c) which adjoins the plateau (8b), wherein the plateau (8b) has a width (b₂) of 0.10 mm to 0.40 mm, wherein the continuously concavely rounded rib flank (8b) drops down at the profile block segment (4a, 5a) to a base level which reproduces that level at which there is an envelope of the tread extending through the radially innermost points of the continuously concavely rounded rib flanks (8c), and wherein the rib (8) has with respect to the base level a height (δₕ) of 0.20 mm to 0.70 mm.

2. Pneumatic vehicle tyre according to Claim 1, **characterized in that** at least one profile block segment (4a, 5a) has a rib structure with two ribs (8) which extend along the outlet openings of the two sipes (6, 7) delimiting the profile block segment (4a, 5a).

3. Pneumatic vehicle tyre according to Claim 2, **characterized in that** the concavely rounded rib flanks (8c) of the two ribs (8) form a uniformly concavely rounded recess (9) between the two ribs (8), wherein the rounding of the recess (9) takes place in particular along an arc of a circle.

4. Pneumatic vehicle tyre according to Claim 1 or 2, with a tread comprising profile blocks (4, 5) with bordering block edges (4b, 5b) which extend parallel to the sipes (6, 7) and are adjoined by block flanks (1a, 2a), and with block segments (4a, 5a) at the borders of the blocks, **characterized in that** at least one of the two profile block segments (4a, 5a) at the borders of the blocks has a rib structure with a rib (8) of which the plateau (8b) is delimited by the bordering block edge (4b, 5b), wherein the rib flank (8a) extending in the radial direction adjoins the block flank (1a, 2a).

5. Pneumatic vehicle tyre according to one of Claims 1 to 4, **characterized in that** at least one profile block segment (5a) has a rib structure with a single rib (8), wherein the concavely rounded rib flank (8c) extends from the plateau (8b) of the rib (8) down to the base level in the middle region of the profile block segment (5a), wherein the remaining outer area of the profile block segment (5a) is at the base level.

6. Pneumatic vehicle tyre according to one of Claims 1 to 5, **characterized in that** at least one of the profile block segments (5a) has an outer area which is completely at the base level of the running surface.

7. Pneumatic vehicle tyre according to one of Claims 1 to 6, **characterized in that** at least one of the profile block segments (5a) at the borders of the blocks has an outer area which is completely at the base area of the running surface.

8. Pneumatic vehicle tyre according to one of Claims 1 to 7, **characterized in that** at least one profile block segment (5a) located between two mutually adjacent sipes (7) has an outer area which is completely at the base level of the running surface.

9. Pneumatic vehicle tyre according to one of Claims 1 to 4, **characterized in that** the tread has profile blocks (4) of which all the profile block segments (4a) have rib structures with two ribs (8).

10. Pneumatic vehicle tyre according to one of Claims 1 to 4, **characterized in that** the tread has profile blocks (5) in which some or all of the profile block segments (5a) have a rib structure with in each case a single rib (8), wherein the ribs (8) extend either along a bordering block edge (5b) or along an outlet opening of a sipe (7).

11. Pneumatic vehicle tyre according to one of Claims 1 to 4, **characterized in that** the tread has profile blocks (5) in which at least two mutually adjacent profile block segments (5a) have a rib structure with in each case a rib (8) which extends along the outlet opening of the respectively outer sipe (7).

## Revendications

1. Pneu de véhicule, destiné en particulier à être utilisé dans des conditions de conduite hivernales, comprenant une bande de roulement profilée qui présente une surface de roulement et qui comprend des blocs profilés (4, 5), chaque bloc profilé étant divisé en segments de blocs profilés (4a, 5a) au moyen d'au moins deux lamelles (6, 7) parallèles qui s'étendent selon un angle ≤ 45° par rapport à la direction axiale de la bande de roulement et qui ont des ouvertures de sortie ayant une largeur (b₁) de 0,40 mm à 0,80 mm et des parois de lamelle (6a, 7a), au moins un segment de bloc profilé (4a, 5a) présentant une structure nervurée constituée d'au moins une nervure (8) qui s'étend le long de et latéralement à l'ouverture de sortie d'une lamelle (6, 7) et sur son étendue, la nervure (8) étant définie conjointement par un flanc de nervure (8a) qui s'étend dans la direction radiale en tant qu'extension de la paroi de lamelle (6a, 7a) et un plateau (8b) qui se raccorde au flanc de nervure (8a),
**caractérisé en ce que**
la nervure (8) est constituée du flanc de nervure (8a) s'étendant dans la direction radiale en tant qu'extension de la paroi de lamelle (6a, 7a), du plateau (8b) et d'un flanc de nervure (8c) qui se raccorde au plateau (8b) et qui est arrondi de manière concave sur toute sa longueur, et donc courbé vers l'intérieur, le plateau (8b) ayant une largeur (b₂) de 0,10 mm à 0,40 mm, le flanc de nervure (8b) arrondi de manière concave sur toute sa longueur descendant jusqu'à un niveau de base au niveau du segment de bloc profilé (4a, 5a), lequel reproduit le niveau sur lequel se trouve une enveloppe de la bande de roulement passant par les points les plus intérieurs en direction radiale des flancs de nervure (8c) arrondis de manière concave sur toute leur longueur, et la nervure (8) ayant une hauteur (δₕ) de 0,20 mm à 0,70 mm par rapport au niveau de base.

2. Pneu de véhicule selon la revendication 1, **caractérisé en ce qu'**au moins un segment de bloc profilé (4a, 5a) présente une structure nervurée avec deux nervures (8) qui s'étendent le long des ouvertures de sortie des deux lamelles (6, 7) délimitant le segment de bloc profilé (4a, 5a).

3. Pneu de véhicule selon la revendication 2, **caractérisé en ce que** les flancs de nervure (8c) arrondis de manière concave des deux nervures (8) forment entre les deux nervures (8) une cuvette (9) uniformément arrondie de manière concave, l'arrondi de la cuvette (9) se faisant en particulier le long d'un arc de cercle.

4. Pneu de véhicule selon la revendication 1 ou 2, comprenant une bande de roulement comportant des blocs profilés (4, 5) ayant des bords de bloc latéraux (4b, 5b) s'étendant parallèlement aux lamelles (6, 7), auxquels se raccordent des flancs de bloc (1a, 2a), et comportant des segments de blocs profilés (4a, 5a) du côté du bord du bloc, **caractérisé en ce qu'**au moins l'un des deux segments de blocs profilés du côté du bord du bloc (4a, 5a) présente une structure nervurée avec une nervure (8) dont le plateau (8b) est délimité par le bord de bloc latéral (4b, 5b), le flanc de nervure (8a) qui s'étend dans le sens radial se raccordant au flanc de bloc (1a, 2a).

5. Pneu de véhicule selon l'une des revendications 1 à 4, **caractérisé en ce qu'**au moins un segment de bloc profilé (5a) présente une structure nervurée avec une seule nervure (8), le flanc de nervure (8c) arrondi de manière concave s'étendant depuis le plateau (8b) de la nervure (8) jusqu'au niveau de base dans la zone centrale du segment de bloc profilé (5a), la surface extérieure restante du segment de bloc profilé (5a) se trouvant sur le niveau de base.

6. Pneu de véhicule selon l'une des revendications 1 à 5, **caractérisé en ce qu'**au moins l'un des segments de blocs profilés (5a) présente une surface extérieure qui se trouve entièrement sur le niveau de base de la surface de roulement.

7. Pneu de véhicule selon l'une des revendications 1 à 6, **caractérisé en ce qu'**au moins l'un des segments de blocs profilés (5a) du côté du bord de bloc présente une surface extérieure qui se trouve entièrement sur le niveau de base de la surface de roulement.

8. Pneu de véhicule selon l'une des revendications 1 à 7, **caractérisé en ce qu'**au moins un segment de bloc profilé (5a) se trouvant entre deux lamelles (7) adjacentes l'une à l'autre présente une surface extérieure qui se trouve entièrement sur le niveau de base de la surface de roulement.

9. Pneu de véhicule selon l'une des revendications 1 à 4, **caractérisé en ce que** la bande de roulement présente des blocs profilés (4) dont tous les segments de blocs profilés (4a) présentent des structures nervurées avec deux nervures (8).

10. Pneu de véhicule selon l'une des revendications 1 à 4, **caractérisé en ce que** la bande de roulement présente des blocs profilés (5), parmi lesquels certains ou la totalité des segments de blocs profilés (5a) présentent une structure nervurée avec une seule nervure (8), les nervures (8) s'étendant soit le long d'un bord de bloc latéral (5b), soit le long d'une ouverture de sortie d'une lamelle (7).

11. Pneu de véhicule selon l'une des revendications 1 à 4, **caractérisé en ce que** la bande de roulement présente des blocs profilés (5), parmi lesquels au moins deux segments de blocs profilés (5a) adjacents l'un à l'autre présentent une structure nervurée avec respectivement une nervure (8), laquelle s'étend le long de l'ouverture de sortie de la lamelle (7) respective la plus extérieure.
